# EUROPEAN PATENT SPECIFICATION

(11) **EP 2 785 654 B1**
(45) Date of publication and mention of the grant of the patent: **18.05.2016**
(21) Application number: 12797687.6
(22) Date of filing: 30.11.2012
(51) Int. Cl.: C02F 3/08, C02F 3/22, C02F 3/28, C02F 3/30, C02F 3/10

(54) **Biological treatment and installation with air-lift and biofilm carriers**
Biologische Behandlung und Anlage mit einem Druckluftheber und Biofilmträger
Traitement biologique et installation comprenant un injecteur à air et des supports de biofilm

(30) Priority: 02.12.2011 EP 11191713; 08.12.2011 US 201161568376 P
(43) Date of publication of application: 08.10.2014
(73) Proprietor: Aqua Cleantech ApS, 8250 Egå (DK)
(72) Inventor: OLESEN, Jens Ole, DK-8400 Ebeltoft (DK)
(74) Representative: Gregersen, Niels Henrik
(86) International application number: PCT/DK2012/050441
(87) International publication number: WO 2013/079075

(56) References cited:
- EP-A1- 0 498 397
- WO-A2-2011/017420
- US-A- 3 439 807
- US-A- 5 690 834
- US-A1- 2005 077 239

## Description

### FIELD OF THE INVENTION

The present invention relates preferably to ways of biologically treating liquids, and devices applicable in this respect. Processes and devices according to the present invention preferably relates to a system for biological treatment of liquid such as water, the system comprising a closed container so as to prevent gas produced in the container from leaking to the surroundings. The container may preferably comprise recirculation of gas produced in the container and in some aspects addition of gasses from external sources. The invention additionally relates to a plurality of serially connected containers.

### BACKGROUND OF THE INVENTION

Today increasing demands for processing liquids are present. The processing often involves biological treatment of liquids such as waste water, semiliquid manure etc. Various attempts have been made to optimise processes for biological treatment of liquids e.g. as presented in WO 9603351.

WO 9603351 discloses an attempt to improve the efficiency of a biological treatment process. The process disclosed takes place in an open ended container with internal flow generation by use of gas addition to generate mixing inside the container. While the process and device disclosed therein indeed is considered as a step towards a more efficient biological treatment process, the process may be seen as still having some critical drawbacks.

US 2002/0185418 A1 discloses s biological reactor process for continuous purification of wastewater by converting its constituents to a solid from that can be easily separated using retainable biological catalysts and a novel reactor. The reactor comprising a reaction vessel and at least one draft tube open at both ends and mounted on a bottom of the vessel. Inside the vessel a circulatory flow is established as well as a bed of bio carriers.

WO 2007/058857 discloses an apparatus for high rate anaerobic treatment of (waste)water with relatively high concentrations of lipidic compounds. In a container, influent is fed from the top and the container is equipped with a separation step at the bottom. Reactor contents are thoroughly mixed by a combined action of a gas lift loop and a liquid recycle over the reactor. The gas lift is called a "natural gas lift" and is provided by internal biogas production without the infeed of gas from a compressor or pump.

US 2005/0077239 discloses a bioreactor comprising a vessel having a bottom region and an interior configured to contain an aqueous suspension of biomass and media. A first gas outlet is provided at the bottom region of the vessel. The first gas outlet is positioned to introduce a first stream of gas to promote growth of the biomass on the media. A lift tube is disposed within the vessel, the lift tube having an inlet disposed at the bottom region of the vessel. A second gas outlet is disposed proximal the lift tube inlet to feed gas to the inlet of the lift tube.

One of the drawbacks in the known systems is the consumption of gas, such as oxygen, and energy needed to drive the systems which still is relatively high and thereby represents costs. In addition, degassing from the system may also represent an environmental issue.

Hence, improved methods and systems for biological treatment of liquids such as water would be advantageous, and in particular more efficient and/or reliable methods and systems would be advantageous.

### OBJECT OF THE INVENTION

It is a further object of the present invention to provide an alternative to the prior art.

In particular, it may be seen as an object of the present invention to provide methods and systems that solve the above mentioned problems of the prior art.

### SUMMARY OF THE INVENTION

Thus, the above described object and several other objects are intended to be obtained in a first aspect of the invention by providing a system for biological treatment of liquid such as water, the system comprising a closed container so as to prevent gas produced in the container from leaking to the surroundings, the container comprising
- a bottom, one or more side walls, and a top,
- a first inlet and a first outlet arranged in the container,
- at least one vertically orientated tube arranged in the container, the lower end of said tube being raised above the bottom of the container,
- means comprising a first gas supply arranged at the lower end of said tube and producing gas bubbles entering into the tube through openings provided in the tube at the lower end thereof, the gas bubbles raising upwardly inside the tube for creating a first circulating flow of liquid and microfilm carriers rising upwardly through the vertically orientated tube, and
- a second gas supply arranged at the intersection between the one or more side walls of the container and the bottom of the container for introduction of gas bubbles and thus creating a second circulating flow of liquid and microfilm carriers in the vicinity of the one or more side walls of the container towards an upper end of the container,
- wherein the upwardly directed first circulating flow through the tube and the upwardly directed second circulating flow in the vicinity of the wall of the container will when they approach the top of the container be diverted towards each other and the interaction between the two flows will result in that the flow turns 180° and flow towards the bottom of the container, and
- wherein at the bottom of the container the flow is split into a flow towards the wall of the container and a flow going into the tube,
   so that two separate first and second circulating flows are established.

The means for creating a circulating flow may preferably comprise a first gas supply being a preferably adjustable supply of gas e.g. air/oxygen up through the vertically arranged tube.

It is noted that the means for creating a circulating flow typically interacts with the vertically arranged tube, in the sense that the tube in combination with the means for creating the circulating flow form at least part of what herein is termed an airlift.

In the present context, a number of terms are being used in a manner being ordinary to a skilled person. However, some of these terms are detailed below.

*Closed container* is preferably used to mean a container having inlets and outlets through which fluid is added to the container and extracted from the container, and which defines a fluid tight enclosure except from the inlets and outlets. Contrary to a closed container is preferably considered e.g. an open ended container constituted by a tube with a bottom but with no upper end lid.

*A vertically orientated tube* is preferably used to mean a tube having a longitudinal extension, being parallel to the direction of the gravity when in use. In case of a cylindrically shaped tube, the longitudinal extension is the axis of symmetry of the tube. It is noted, that the term *tube* and *tubular shaped* is to be construed in a broad context not only meaning a cylindrical body having a circular cross section, but also including a tubular body with other cross sections, such as square shaped, triangular, or in general polygon shaped. The tube is preferably made from a material being non-penetrable to fluid.

Vertically orientated and vertically arranged are used interchangeable herein.

*Circulating flow* is preferably used to mean a flow going around e.g. the vertically orientated tube in a manner where fluid goes through the tube internally in the tube.

*Microfilm carriers* is preferably used to mean elements having surfaces on which a microfilm may be formed, which microfilm plays a major role in the treatment process and is preferably formed by micro-organisms.

*Airlift* is preferably used to mean combination of a vertically orientated tube and the gas supply arranged at an end of the tube as disclosed herein.

*Diameter* as used herein is used in a conventional manner meaning e.g. for quantifying the size of a cross section and if the cross section deviated from circular the diameter referred to is the equivalent diameter: D=4*Area/length of perimeter.

*Creating* a flow in a stagnant liquid region is preferably used to mean that a flow is created in a region of a container which would if - if the flow was not created - be a region with stagnant flow.

*Liquid* is preferably used to mean a substance in liquid phase. Liquid is in many of the preferred embodiments water, such as nutrient contaminated water, waste water in general or the like.

According to the invention, a closed container where oxygen, in the form of air, oxygen enriched air or pure oxygen is added and recirculated is preferably to be used for aerobic microbial processes, such as the nitrification process which is an aerobic autotrophic process. A closed container with recirculation of the gasses produced in the process is preferably to be kept anoxic/anaerobic, i.e. absent of atmospheric oxygen. The process in this reactor is typically a de-nitrification process.

In a second aspect, the invention relates to a system for biological treatment of liquid such as water, the system being preferable a system according to the first aspect, and in which system the first inlet and the first outlet being connected to each other and forms a recirculating loop for recirculating gas produced in the container and/or gas supplied from a gas source.

In a third aspect, the invention relates to a system for biological treatment of liquid such as water, the system comprises a plurality of closed containers for treatment of the liquid with, typically different, purification techniques, the containers being preferably containers according to first aspect of the invention. The containers are preferably serially connected so that an inlet of a downstream container is connected to an outlet of an upstream container, thereby enabling that liquid leaving said upstream container through the outlet enters into said downstream container through its inlet. The most upstream container is typically connected to a source of liquid to be treated and the most downstream container is typically connected to a deposition site, such as a tank, or handled in an ordinary manner for treated liquid.

In some preferred embodiments of systems according to the thirds aspect of the invention, the first inlet and first outlet of each container in a first number of containers are connected, so that gas produced in each of the first number of containers is recirculated back to the same container and wherein the first inlets respectively first outlets for a second number are connected so that gas produced in the second number of containers is mixed together and distributed to the containers of the second number of containers.

In a fourth aspect, the invention relates a method for treatment of liquids, which method preferably utilises a system according to three aspects above. In methods according to the fourth aspect, untreated liquid is led into a container containing microfilm carriers on which a microfilm is growing, said microfilm generates the intended decomposition of the contamination contained in the liquid, and during which method a circulating flow of liquid and microfilm carriers is created in the container having an area with a concentrated flow in which a concentration of the microfilm carriers takes place.

Typically and preferably, methods according to the fourth aspect preferably comprise recirculating gas created by the biological process in the container and/or gas added to the container.

Further embodiments of the invention are presented in the following and in the accompanying drawings and claims.

The first, second third and fourth aspect of the present invention may each be combined with any of the other aspects. These and other aspects of the invention will be apparent from and elucidated with reference to the embodiments described hereinafter.

### BRIEF DESCRIPTION OF THE FIGURES

The present invention and in particular preferred embodiments thereof will now be disclosed in further details with reference to the accompanying drawings in which:
Figure 1 shows schematically in a cross sectional side view a system for biological treatment of liquid such as water, the system comprises a single container, according to a first embodiment of the present invention,
Figure 2 shows schematically in a cross sectional side view a system for biological treatment of liquids such as water, the system comprising a plurality (such as four as shown) of serially connected container, according to a second embodiment of the present invention,
Figure 3 shows schematically a container as depicted in figure 1 with the flow pattern produced in the container by the first gas supply in combination with the second gas supply,
Figures 4a-d shows schematically each a preferred embodiment of a container with airlift(s), the figures shows the container from above with only the vertically arranged tube of the airlift shown for clarity reason only,
Figure 5 shows schematically a preferred embodiment of container with a number of airlifts distributed with equal distance between them inside a container having a rectangular cross section, the figure shows the container from above with only the vertically arranged tube shown for clarity reason only,
   and
Figure 6 shows schematically in a cross section side view further details of a preferred embodiment of a system according to the present invention.

### DETAILED DESCRIPTION OF PREFERRED EMBODIMENTS

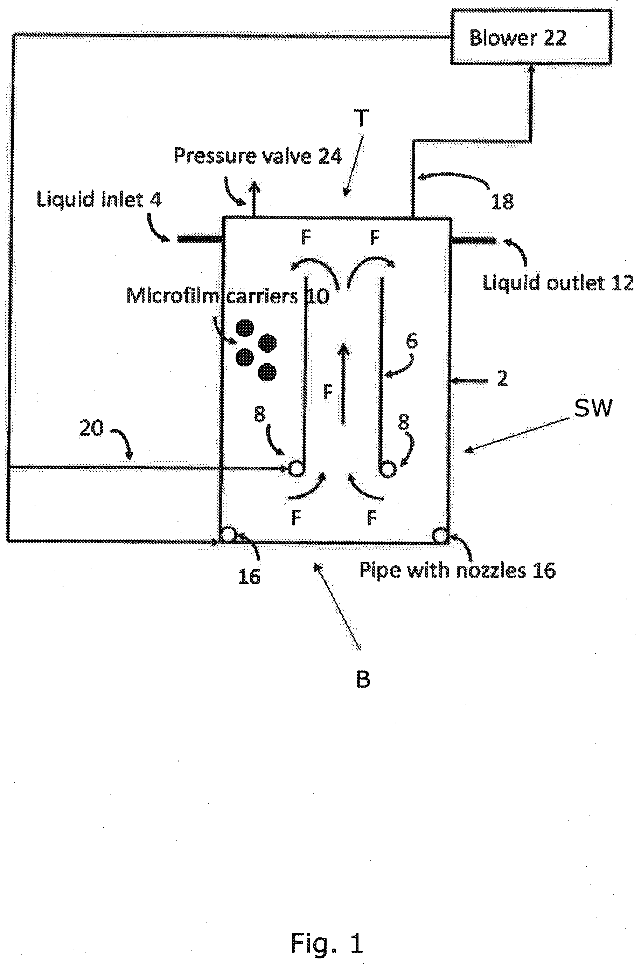

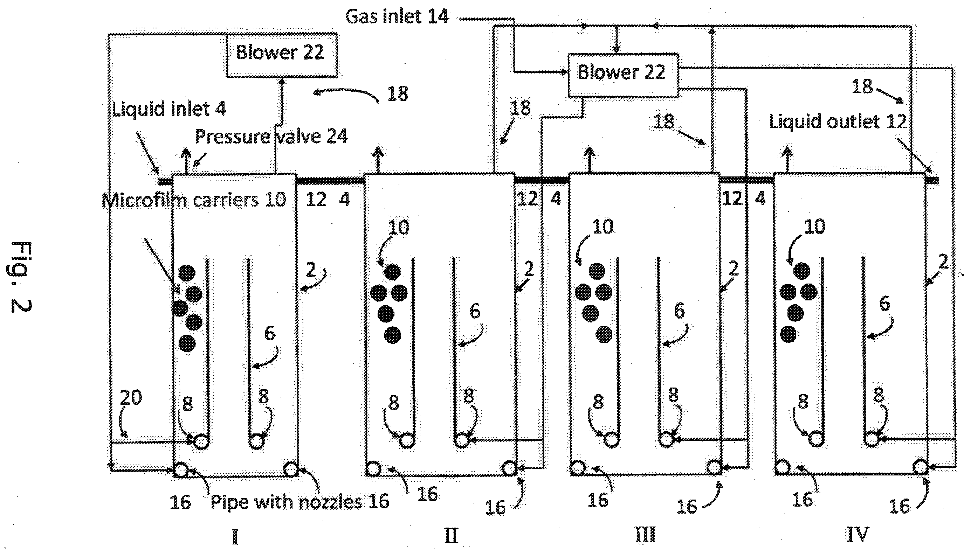

With reference to fig. 1a system for biological treatment of liquid such as water according to the present invention is disclosed. The system comprises a closed container 2. Inside the container, liquid to be treated is present together with biofilm carriers as disclosed in figures 2-13 in WO9603351. The bio-film carriers are preferably elements having an outwardly open cell structure for increasing the overall surface of the particles and/or the bio-film carriers are elements having a mineral grain-like structure or have a cave-like surface structure like the pattern on a golf ball.

During the treatment of the liquid, gas may be produced and the container 2 is closed in a way that prevents gas and/or liquid from leaking out from the container 2, thus preventing gas produced in the container from leaking to the surroundings unintentionally. The container 2 comprising a bottom B, one or more side walls SW, and a top T. As shown in fig. 1, the container is preferably tubular shaped with a cylindrically shaped sidewall a disc-shaped bottom and a top. However, the tubular shape may also be polygonally shaped, or rectangular shaped. The sidewall, the bottom, the sidewall and top being made from fluid tight materials and if not made integrally with each other then attached to each other in a fluid tight manner.

The system also comprising a first inlet 20 and a first outlet 18 arranged in the container 2. As shown in fig. 1, the first inlet 20 and the first outlet 18 being connected to each other and forms a recirculation loop for recirculating gas produced in the container. The connection is provided by suitable piping and fittings and the lines in fig. 1 represents such pipe and fittings in a schematic manner. The recirculation may be assisted by a blower as indicated by numeral 22 in fig. 1.

Some of the processes, which the system may carry out, may advantageously be assisted by or requiring addition of gasses, such as air, oxygen, nitrogen etc. To accomplish this, a gas stream may be supplied from a gas source (not shown) and to the container. The gas stream may be supplied via an inlet either dedicated to this purpose or the gas stream may be mixed into the recirculating stream and enter into the container 2 via inlet 20.

The gas inlet through the first inlet 20 is fed to a first gas supply 8 producing gas bubbles in the container rising upwardly in the liquid contained in the container inside the vertically arranged tube 6. The vertically arranged tube 6 is in the preferred embodiments shown in the figures cylindrically shaped, although the vertically arranged tube 6 may have other cross sections, such as square, triangular or in general polygonal.

This upwardly going motion generates circulating flow being an internal recirculating of liquid, with an upwardly going motion inside the vertically arranged tube 6 and a downwardly going motion outside the vertically arranged tube 6. In fig. 1 this circulating flow is indicated by the arrows labelled F.

As indicated in the figure, the first gas supply 8 is arranged internally in the container 2 and at the lower end of the vertically arranged tube 6. The combination of the vertically arranged tube 6 and the first gas supply 8 is termed an airlift. In operation a circulating flow of liquid and microfilm carriers is created by the airlift in the container having an area with a concentrated flow in which a concentration of the microfilm carriers takes place. This concentrated flow is typically within the vertically arranged tube 6.

That the first gas supply 8 is arranged at the lower end of the vertically arranged tube 6 means in many preferred embodiments that the gas enters into the tube 6 through openings provided in the tube 6 at the lower end thereof. By lower end is preferably meant that the openings are arranged no further away from the end of the tube than 1 diameter of the tube, such as a ½ diameter, preferably ¼ diameter.

The openings are preferably equally distributed (with equal distance between them) in one or more a horizontal proceeding perimeters of the tube. Thus, the openings may be seen as being distributed in one or more rows where each row is aligned with a single horizontal plane.

Alternatively or in combination therewith, the container comprising a second gas supply 16, preferably supplying atmospheric air or oxygen at the bottom of the container for creating a flow in a stagnant liquid regions, preferably near the bottom in the vicinity of the side wall of the containers.

In preferred embodiments and as disclosed herein, the first gas supply 8 receives gas produced in the container via the first inlet 20 whereby the recirculation is provided. The recirculation is assisted by the blower 22. The second gas supply 16 also receives gas produced in the container via the first inlet 20. Thus, the second gas supply 16 preferably takes part in the recirculation. It should be noted, that the terms inlet and outlet should be interpreted in a broad context e.g. as two or more connections (as indicated in fig. 1: one for second gas supply 16 and one for the first gas supply 8) may form the inlet. Similarly, the outlet should be interpreted in a broad context. Furthermore, gas, such as air, oxygen or oxygen enriched air from a gas source may be mixed into the recirculated gas and/or gas from the source may be fed to the first or second gas supplies instead of the recirculated gas.

As indicated above, the container 2 comprising at least one vertically orientated tube 6 arranged inside the container 2, the lower end of said tube 6 being raised above the bottom of the container 2 and having means 8 (the first gas supply 8) for creating a circulating flow of liquid and microfilm carriers contained in the container though the tube.

The first gas supply 8 and the second gas supply 16 are preferably torus shaped tubes with inlet connections for inletting gas and having openings allowing the gas to flow out. In the first gas supply 8, the openings through which the gas flows direct the gas bubbles into the vertically arranged tube 6. The openings of the second gas supply 16, directs the gas downwardly. Alternatively, or in combination thereto, the second gas supply 16 may be in the form of a pipe with nozzles.

The container 2 is preferably a disc-shaped bottom and a top, the sidewall, the bottom, the sidewall and top being made from fluid tight materials and if not made integrally with each other then attached to each other in a fluid tight manner. The container 2 preferably comprises a gastight top equipped with a possibility for off-gas, e.g. being gas produced in the container 2 and/or introduced into the container 2, collection and overpressure release 24.

To avoid biofilm carriers 10 from leaving the container, the container comprising discrimination means, typically in the form of a filter element arranged at the outlets and/or inlets of the container 2, detaining the biofilm carriers 10 in the container.

The vertically arranged tube 6 is preferably adjustably raised a distance over the bottom of the container for adjusting the flow of liquid and carriers towards and up through the tube 6. Typically, the vertically arranged tube 6 is arranged in the centre of the container 2.

Alternatively, the container comprises a number of vertically arranged tubes 6 distributed over the bottom area of the container.

The system further comprises a liquid inlet 4 and a liquid outlet 12. Water - or other liquids to be treated - flows into the container 2 through the inlet and flows out of the container 2 through the liquid outlet 12. In many preferred treatment processes, the treatment is carried out with a constant flow of liquid into and out of the container through the liquid inlet 4 and the liquid outlet 12. However, the system may also be applied for a batch processing of liquid.

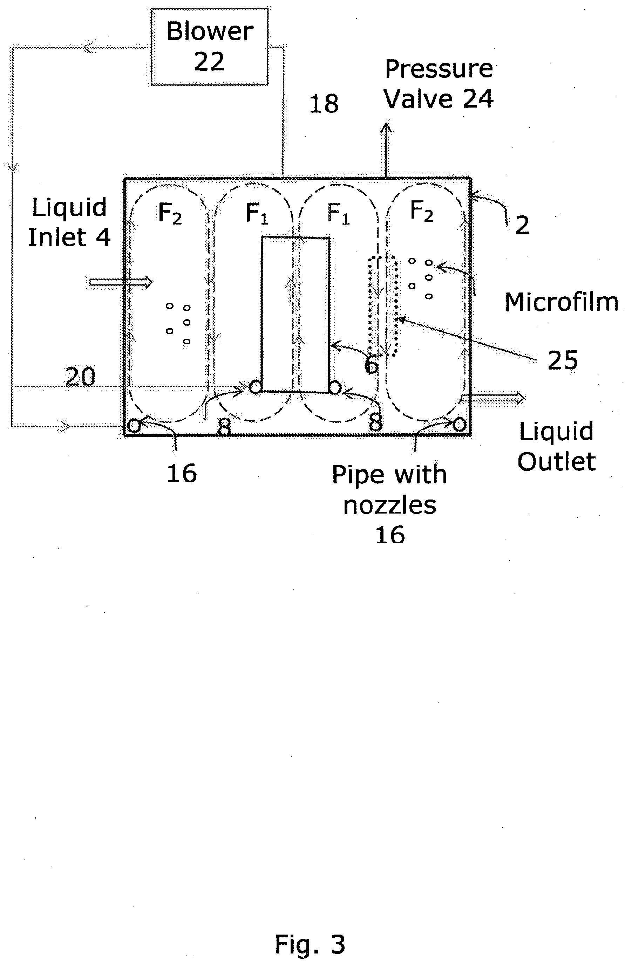

Reference is made to figure 3 which shows a container as depicted in figure 1 with the flow pattern produced in the container by the first gas supply 8 in combination with the second gas supply 16. As outlined above, the air bubbles of the first gas supply 8 creates a circulating flow of liquid and microfilm carriers by the airlift in the container 1. The circulating flow having a region in which a concentration of the microfilm carrier (number of carrier per unit volume) takes place. This flow region is typically within the vertically arranged tube 6. In figure 3, this circulating flow is labelled F₁ and may be referred to as a first circulating flow.

The second gas supply 16 will also create a circulating flow being separate from the first circulating flow F₁. In figure 3, this second circulating flow is labelled F₂ and is created by the air bubbles introduced through the second air supply. The buoyancy force acting on the air bubbles will move the air bubles towards the upper end of the container 1 and as the air bubbles are introduced in stagnant liquid regions, preferably near the bottom in the vicinity of the side wall of the container 1, the air bubbles will rise in the vicinity of the side wall of the container 1. As the air bubbles rise through the liquid in the container 1, they will act upon the liquid and micofilm carriers creating a flow of liquid and micro filmcarriers following the path of the air bubbles. Similarly, the air bubbles rising though the tube 6 will create a flow upwardly through the tube 6.

Thus, the upwardly directed flow through the tube 6 and the upwardly directed flow in the vicinity of the wall of the container will when they approach the closed upper part of the container (top of the container 1) be diverted towards each other and the interaction between the two flows will result in that the flow turn 180° and flow towards the bottom. In the bottom the flow is split into a flow towards the wall of the container and into a flow going into the tube 6.

It is noted that in regions 25 where the two flows flow together, the two flows may be mixed into one flow. The container 1 is typically cylindrically shaped and the first and second air supply 8, 16 distributes air bubbles substantially homogeneously along a circumference of a circle. Thus, in an overall perspective, two elliptic torus shaped flow patterns F₁ F₂ are created.

The dimensions of the two elliptic torus shaped flow patterns F₁ F₂ and the velocities of the flow may be controlled inter alia by the amount of air (or gas in general) introduced through the first and second air supply 8, 16. In preferred embodiments, the following has shown to produce desirable results:

| | |
|---|---|
| Internal diameter of container 2 | 2-20 m |
| Level (the level is the height of the liquid coloum inside the container 2; often there is no airspace above the liquid in the container and the level thereby equals the internal height of the container) | 2-8 m |
| Mass flow of air to the first air supply 8 (nm3 means normal cubic meter) | 4 - 6280 Nm3/hr |
| Mass flow of air to the second air supply 16 (nm3 means normal cubic meter) | 4 - 6280 Nm3/hr |
| The distance between the bottom of the container and the lower end of the vertically arranged tube 6 | 0.2-0.4 m |

It is noted that all the air flowing to the air supplies 8, 16 goes into the container via the supplies preferably simultaneous whereby the first and the second circulating flow (F₁,F₂,) are co-existing. Further, it is often preferred that the amount of air (or gas in general) flowing to the first air supply 8 and to the second air supply 16 are substantially equal. This means for instance that if a single first air supply 8 and a single second air supply 16 are present in the container 2, and the first air supply 8 receives 50 Nm3/hr then the second air supply will also receive 50 Nm/hr. If more than one first air supply 8 is present in a single container 2 and a single second air supply 16 is present then the total amount of air to the first air supplies 8 is again equal to the amount of the second air supply 16; the total amount of air to the first air supplies 8 is equally distributed among all of the first air supplies 8.

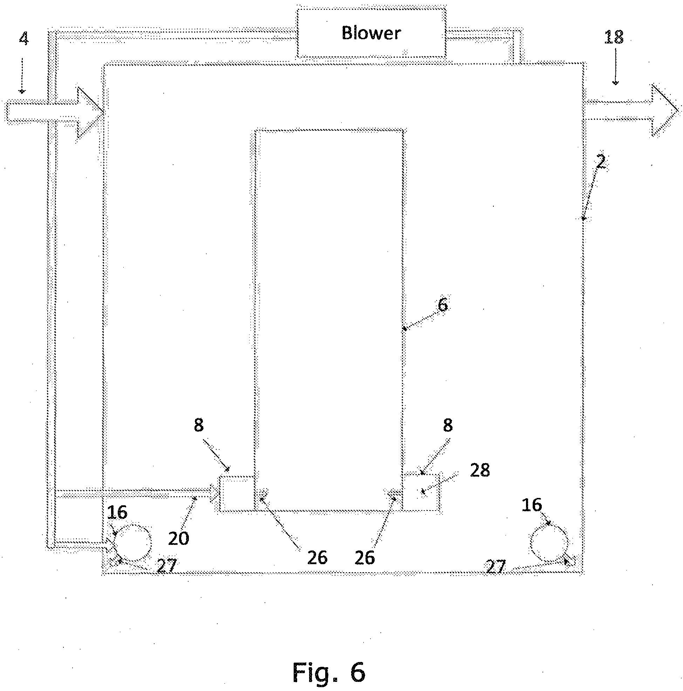

However it may be preferred to operate the first and/or the second air supply 8, 16 intermittently, such as alternatingly whereby the existence of the first circulating flow (F₁) and the second circulating flow (F₂) may become alternating. Fig. 6 shows schematically further details pertaining to the invention. Again, 2 refers to the container, and 6 refers to the vertically arranged tube. The first air supply 8 is embodied as cavity 28 with a square shaped cross section encircling the lower end of the vertically arranged tube 6. Openings are provided in the wall of the vertically arranged 6 into the cavity 28 at the lower end of the vertically arranged tube 6. Further, the first inlet 20 feeds air or in general gas into the cavity 28 at elevated pressure relatively to the pressure in the container whereby the air distributes in the cavity 28 and flows out through the openings in the wall of the vertically arranged tube 6 and into the liquid contained in the container. The gas flows out of the openings in a horizontal direction.

As also indicated in fig. 6 the second air supply 16 receives air or in general gas and the air flows out of the second air supply 16 in downwardly direction as indicated by the arrow labelled 27. The second air supply is formed as a torus shaped tube arranged at the corner of the container 2 as indicated in fig. 6 in a distance from the corner. The flow out of the second air supply is directed towards the corner of the container 2. It is noted that the dimensions indicated in fig. 6 are not on scale and that e.g. the diameter of the torus shaped tube of the second air supply 16 will be relatively smaller compared to the overall dimensions of the container 2 than indicated in fig. 6.

In another aspect of the invention, the system comprises a plurality of closed containers 2 for treatment of the liquid with different purification techniques as shown in fig. 2.

The containers 2 are preferably and typically containers as disclosed herein and e.g. with reference to figure 1. As shown in fig. 2, the containers are serially connected so that an inlet 4 of a downstream container is connected to an outlet 12 of an upstream container, thereby enabling that liquid leaving said upstream container through the liquid outlet enters into said downstream container through its inlet.

Recirculation of gas produced in the containers 2 and optionally further gas added is also applied in the system of serially connected containers 2.

The configuration shown in fig. 2 is designed towards a de-nitrification followed by a nitrification. The de-nitrification is carried out in the first container labelled I in fig. 2. This container is configured so that the gas recirculated from first outlet 18 to first inlet 20 is only gas produced in the container 2 (the container labelled I). After the de-nitrification has been carried out, the liquid flows out of the liquid outlet 12 and into the downstream container II through inlet 4. After its passage through container II the liquid flows into container III and finally into container IV. The most upstream container is typically connected to a source of liquid to be treated and the most downstream container is typically connected to a deposition site, such as a tank, or handled in an ordinary manner for treated liquid.

The three containers II, III and IV have a common recirculation system provided by the first outlets 18 are connected to a common blower which feeds the gas to all three first inlets of the three containers II, III, IV and thereby to the first and second air supplies 16, 8. The processes carried out in the three containers II, III, IV are primarily aerobic processes, such as a nitrification process requiring oxygen. Gas such as oxygen or oxygen enriched air 14 is added to the gas produced in the containers 2 (that is containers II, III and IV). This is indicated in fig. 2 by the arrow labelled gas inlet leading to the blower.

However, it is envisaged, that the three containers 2 II, III, IV may each have their own recirculation system and its own gas supply if this is desired, e.g. to optimise the amount of oxygen added to the liquid in the containers.

Furthermore, the number of containers shown in fig. 2 is exemplified with one container 2 for the de-nitrification process and three for the nitrification process. Depending on the need for treatment, these numbers may be varied individually. In addition, the invention does not prevent other treatment processes to be performed inline with the disclosure presented herein.

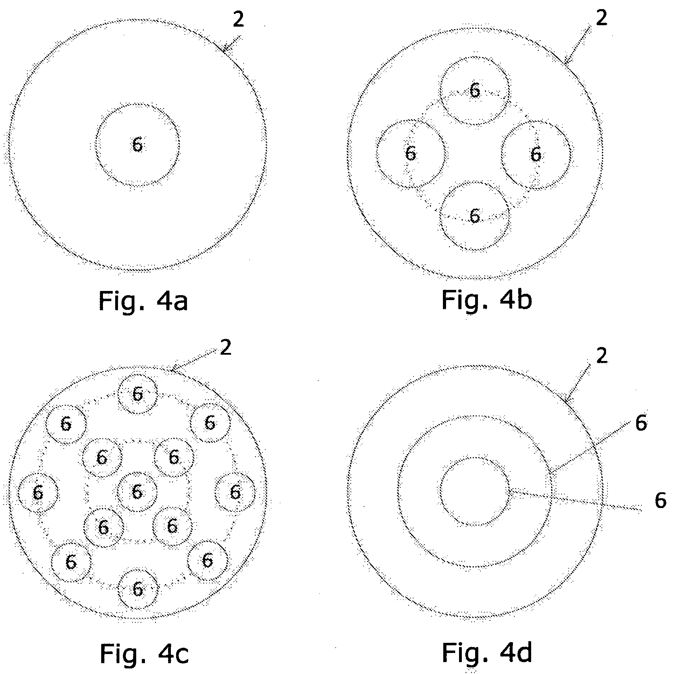

Figures 4a-d shows each a preferred embodiment of a container 2 with an airlift; the figures each show the container from above with only the tube 6 of the airlift shown for clarity reason only. The other details of the system may be arranged as disclosed e.g. connection with fig. 1 and 6 below, that is in particular, the second air supply 16 being arranged at the intersection between the side wall of the container 2 and the bottom of the container 2. As will become apparent from below, a system according to the invention may comprise a plurality of airlifts, which is a plurality of vertically arranged tubes 6 each with a first air supply 8. However, it is generally preferred to have only a single second air supply 16 which is arranged at the corner(s) of the container 2, that is at the intersection between the side wall(s) of the container 2 and the bottom of the container 2.

The embodiment shown in fig. 4a resembles the container shown in fig. 1 and comprises a single vertically arranged tube 6. The tube 6 is arranged co-axially with the cylindrically shaped container 2.

In the embodiment shown in fig. 4b, four tubes 6 are arranged internally in the container 2. The four tubes are distributed with their centres on a circle (shown by dotted lines) being co-centric with a cross section of the container 2. Furthermore, the tubes are angular spaced by 90° measured as the angle between the centre two neighbouring tubes 6 and the centre of the container 2.

In the embodiment shown in fig. 4c, thirteen tubes 6 are arranged internally in the container 2. One tube 6 is arranged in the centre of the container 2 and the remaining twelwe are distributed along the perimeter of two concentric circles (shown by dotted lines) which two circles share a common centre with the cylindrically shaped container 2, thereby defining two layers of the tubes 6. The tubes of each layer are angular equal distributed, that is in the outer most layer having eight tubes 6 they are distributed by 45° and in the layer with four tubes 2, there are distributed by 90°.

In the embodiment of fig. 4d, two tubes 6 are concentric arranged with a common centre for the two tubes 6 and the cylindrically shaped container 2.

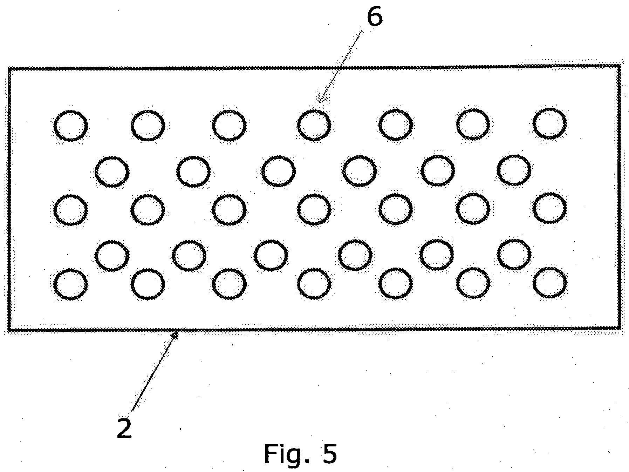

Figure 5 shows schematically a preferred embodiment of container with a number (thirty three) of airlifts distributed with equal distance between them inside a container having a reactangular cross section. Again, only the tubes 6 of the airlifts are shown in the container 2. As it also appears from fig. 6, the tubes 6 are arranged in staggered layers.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A system for biological treatment of liquid such as water, the system comprising a closed container (2) so as to prevent gas produced in the container from leaking to the surroundings, the container comprising
- a bottom, one or more side walls, and a top,
- a first inlet (20) and a first outlet (18) arranged in the container,
- at least one vertically orientated tube (6) arranged in the container (2), the lower end of said tube being raised above the bottom of the container (2),
- means (8) comprising a first gas supply (8) arranged at the lower end of said tube (6) and producing gas bubbles entering into the tube (6) through openings provided in the tube at the lower end thereof, the gas bubbles raising upwardly inside the tube (6) for creating a first circulating flow (F₁) of liquid and microfilm carriers rising upwardly through the vertically orientated tube, and
- a second gas supply (16) arranged at the intersection between the one or more side walls of the container and the bottom of the container for introduction of gas bubbles and thus creating a second circulating flow (F₂) of liquid and microfilm carriers in the vicinity of the one or more side walls of the container towards an upper end of the container,
- wherein the upwardly directed first circulating flow (F₁) through the tube (6) and the upwardly directed second circulating flow (F₂) in the vicinity of the wall of the container will when they approach the top of the container be diverted towards each other and the interaction between the two flows will result in that the flow turns 180° and flow towards the bottom of the container, and
- wherein at the bottom of the container the flow is split into a flow towards the wall of the container and a flow going into the tube,
so that two separate first and second circulating flows (F₁, F₂) are established.

2. A system according to claim 1, wherein the container is tubular shaped with a cylindrically shaped sidewall a disc-shaped bottom and a top, the sidewall, the bottom, the sidewall and top being made from fluid tight materials and if not made integrally then attached to each other in a fluid tight manner.

3. A system according to any of the preceding claims, wherein the container comprising discrimination means, typically in the form of a filter element arranged at the inlet and/or outlet of the container, detaining the biofilm carriers (10) in the container.

4. A system according to any of the preceding claims, wherein the second gas supply (16)supplies atmospheric air, oxygen and/or gas produced in the container (2) at the bottom of the container for creating a flow in a stagnant liquid regions, preferably at bottom in the vicinity of the side wall of the containers, the second gas supply (16) receiving preferably gas via the first inlet

5. A system according to any of the preceding claims, wherein the vertically orientated tube (6) is adjustably raised a distance over the bottom of the container for adjusting the flow of liquid and carriers towards and up through the tube (6).

6. A system according to any of the preceding claims, wherein the first gas supply (8) being a preferably adjustable supply of gas e.g. air/oxygen up through the vertically orientated tube (6) the first gas supply (8) preferably receiving gas via the first inlet (20).

7. A system according to claim 6, wherein the first gas supply (8) is arranged internally in the container (2) and at the lower end of the vertically orientated tube (6).

8. A system according to any of the preceding claims, wherein the vertically orientated tube (6) is arranged in the centre of the container (2).

9. A system according to any of the preceding claims 1-8, wherein the system comprises a number of vertically orientated tubes (6) distributed over the bottom area of the container.

10. A system according to any of the preceding claims, wherein the vertically orientated tube (6) is cylindrically shaped.

11. A system according to any of the preceding claims, wherein the system comprises a liquid inlet (4) through which liquid to the treated is fed into the container (2) and a liquid outlet (12) through which treated liquid leaves the container (2).

12. A system according to any of the preceding claims, wherein the first inlet (20) and the first outlet (18) being connected to each other and forms a recirculating loop for recirculating gas produced in the container and/or gas supplied from a gas source, and wherein, preferably, the first outlet 18 is also connected to second gas supply (16).

13. A system for biological treatment of liquid such as water, the system comprises a plurality of closed containers (2) for treatment of the liquid with, typically different, purification techniques, the containers being containers according to any of the preceding claims, wherein
the containers are serially connected so that an inlet of a downstream container is connected to an outlet of an upstream container, thereby enabling that liquid leaving said upstream container through the outlet enters into said downstream container through its inlet.

14. A system according to claim 13, wherein the bio-film carriers are elements having a mineral grain-like structure or have a cave-like surface structure like the pattern on a golf ball

15. A method for treatment of liquids, which method utilises a system according to any of the preceding claims, in which method untreated liquid is led into a container (2) containing microfilm carriers on which a microfilm is growing, said microfilm generates the intended decomposition of the contamination contained in the liquid, and during which method a first and a second circulating flow (F₁,F₂) of liquid and microfilm carriers are created in the container having an area with a concentrated flow in which a concentration of the microfilm carriers takes place.

## Patentansprüche

1. System zur biologischen Behandlung von Flüssigkeit wie Wasser, wobei das System einen geschlossenen Behälter (2) umfasst, um zu verhindern, dass Gas, das in dem Behälter erzeugt wird, in die Umgebung entweicht, wobei der Behälter umfasst:
- einen Boden, eine oder mehrere Seitenwände und eine Oberseite,
- einen ersten Einlass (20) und einen ersten Auslass (18), die in dem Behälter angeordnet sind,
- mindestens ein vertikal ausgerichtetes Rohr (6), das in dem Behälter (2) angeordnet ist, wobei das untere Ende des Rohrs über dem Boden des Behälters (2) angehoben wird,
- Mittel (8), umfassend eine erste Gaszufuhr (8), die am unteren Ende des Rohrs (6) angeordnet ist und Gasblasen erzeugt, die in das Rohr (6) durch Öffnungen eintreten, die in dem Rohr am unteren Ende davon bereitgestellt sind, wobei die Gasblasen innerhalb des Rohrs (6) aufsteigen, um eine erste zirkulierende Strömung (F₁) von Flüssigkeit und Mikrofilmträgern zu erzeugen, die durch das vertikal ausgerichtete Rohr nach oben steigen, und
- eine zweite Gaszufuhr (16), die an der Schnittstelle zwischen der einen oder den mehreren Seitenwänden des Behälters und dem Boden des Behälters zum Einführen von Gasblasen angeordnet ist, wodurch eine zweite zirkulierende Strömung (F₂) von Flüssigkeit und Mikrofilmträgern in Nachbarschaft der einen oder mehreren Seitenwände des Behälters in Richtung eines oberen Endes des Behälters erzeugt wird,
- wobei die nach oben geleitete erste zirkulierende Strömung (F₁) durch das Rohr (6) und die nach oben geleitete zweite zirkulierende Strömung (F₂) in Nachbarschaft der Wand des Behälters, wenn sie die Oberseite des Behälters erreichen, zueinander umgeleitet werden und die Wechselwirkung zwischen den zwei Strömungen dazu führt, dass die Strömung um 180° wendet und zum Boden des Behälters strömt, und
- wobei am Boden des Behälters die Strömung in eine Strömung in Richtung der Wand des Behälters und eine Strömung in das Rohr aufgeteilt wird,
so dass zwei getrennte erste und zweite zirkulierende Strömungen (F₁, F₂) hergestellt werden.

2. System nach Anspruch 1, wobei der Behälter rohrförmig ist und eine zylindrische Seitenwand, einen scheibenförmigen Boden und eine Oberseite aufweist, wobei die Seitenwand, der Boden, die Seitenwand und die Oberseite aus fluiddichten Materialien hergestellt sind und nicht einstückig miteinander ausgebildet sind, wenn sie fluiddicht aneinander befestigt werden.

3. System nach einem der vorhergehenden Ansprüche, wobei der Behälter, der Unterscheidungseinrichtungen umfasst, typischerweise in Form eines Filterelements, das an dem Einlass und/oder Auslass des Behälters angeordnet ist, die Biofilmträger (10) in dem Behälter zurückhält.

4. System nach einem der vorhergehenden Ansprüche, wobei die zweite Gaszufuhr (16) atmosphärische Luft, Sauerstoff und/oder Gas, das in den Behälter (2) am Boden des Behälters erzeugt wird, zuführt, um eine Strömung in stagnierenden Flüssigkeitsbereichen zu erzeugen, vorzugsweise am Boden in Nachbarschaft der Seitenwand der Behälter, wobei die zweite Gaszufuhr (16) vorzugsweise Gas über den ersten Einlass erhält.

5. System nach einem der vorhergehenden Ansprüche, wobei das vertikal ausgerichtete Rohr (6) verstellbar mit einem Abstand über dem Boden des Behälters angehoben ist, um die Strömung von Flüssigkeit und Trägern in Richtung und durch das Rohr (6) nach oben einzustellen.

6. System nach einem der vorhergehenden Ansprüche, wobei die erste Gaszufuhr (8) vorzugsweise eine verstellbare Zufuhr von Gas, z. B. Luft/Sauerstoff, hoch durch das vertikal ausgerichtete Rohr (6) ist, wobei die erste Gaszufuhr (8) vorzugsweise Gas über den ersten Einlass (20) erhält.

7. System nach Anspruch 6, wobei die erste Gaszufuhr (8) im Inneren des Behälters (2) und am unteren Ende des vertikal ausgerichteten Rohrs (6) angeordnet ist.

8. System nach einem der vorhergehenden Ansprüche, wobei das vertikal ausgerichtete Rohr (6) in der Mitte des Behälters (2) angeordnet ist.

9. System nach einem der vorhergehenden Ansprüche 1 bis 8, wobei das System eine Anzahl von vertikal ausgerichteten Rohren (6) umfasst, die über die Bodenfläche des Behälters verteilt sind.

10. System nach einem der vorhergehenden Ansprüche, wobei das vertikal ausgerichtete Rohr (6) zylindrisch ist.

11. System nach einem der vorhergehenden Ansprüche, wobei das System einen Flüssigkeitseinlass (4) umfasst, durch den zu behandelnde Flüssigkeit in den Behälter (2) eingeleitet wird, und einen Flüssigkeitsauslass (12), durch den behandelte Flüssigkeit den Behälter (2) verlässt.

12. System nach einem der vorhergehenden Ansprüche, wobei der erste Einlass (20) und der erste Auslass (18) miteinander verbunden sind und eine Rezirkulationsschleife zum Rezirkulieren von Gas, das in dem Behälter erzeugt wird, und/oder Gas, das von einer Gasquelle zugeführt wird, bilden, wobei vorzugsweise der erste Auslass (18) auch mit der zweiten Gaszufuhr (16) verbunden ist.

13. System zur biologischen Behandlung von Flüssigkeit wie Wasser, wobei das System mehrere geschlossene Behälter (2) für die Behandlung der Flüssigkeit mit typischerweise unterschiedlichen Reinigungstechniken umfasst, wobei die Behälter Behälter nach einem der vorhergehenden Ansprüche sind, wobei
die Behälter in Reihe verbunden sind, so dass ein Einlass eines stromabwärtigen Behälters mit einem Auslass eines stromaufwärtigen Behälters verbunden ist, wodurch ermöglicht wird, dass Flüssigkeit, die den stromaufwärtigen Behälter durch den Auslass verlässt, in den stromabwärtigen Behälter durch seinen Einlass eintritt.

14. System nach Anspruch 13, wobei die Biofilmträger Elemente sind, die eine mineralkornartige Struktur oder eine vertiefungsartige Oberflächenstruktur wie das Muster auf einem Golfball aufweisen.

15. Verfahren zur Behandlung von Flüssigkeiten, wobei das Verfahren ein System nach einem der vorhergehenden Ansprüche benutzt, wobei in dem Verfahren unbehandelte Flüssigkeit in einen Behälter (2) geleitet wird, der Mikrofilmträger enthält, auf denen ein Mikrofilm wächst, wobei der Mikrofilm den beabsichtigten Abbau der in der Flüssigkeit enthaltenen Verunreinigung erzeugt, wobei während dieses Verfahrens eine erste und eine zweite zirkulierende Strömung (F₁, F₂) von Flüssigkeit und Mikrofilmträgern in dem Behälter erzeugt werden, der einen Bereich mit einer konzentrierten Strömung aufweist, in dem eine Konzentration der Mikrofilmträger erfolgt.

## Revendications

1. Système de traitement biologique d'un liquide tel que l'eau, le système comprenant un récipient fermé (2) de sorte à empêcher la fuite dans l'atmosphère environnante du gaz produit dans le récipient, le récipient comprenant
- un fond, une ou plusieurs parois latérales, et un sommet,
- une première entrée (20) et une première sortie (18) disposées dans le récipient,
- au moins un tube orienté verticalement (6) disposé dans le récipient (2), l'extrémité inférieure dudit tube étant soulevée au-dessus du fond du récipient (2),
- des moyens (8) comprenant une première alimentation en gaz (8) disposée à l'extrémité inférieure dudit tube (6) et produisant des bulles de gaz entrant dans le tube (6) à travers des ouvertures pratiquées dans le tube à l'extrémité inférieure de celui-ci, les bulles de gaz montant à l'intérieur du tube (6) pour créer un premier débit circulant (F₁) de liquide et de vecteurs micropelliculaires montant à travers le tube orienté verticalement, et
- une deuxième alimentation en gaz (16) disposée à l'intersection entre la ou les parois latérales du récipient et le fond du récipient pour introduction de bulles de gaz, et créant ainsi un deuxième débit circulant (F₂) de liquide et de vecteurs micropelliculaires aux environs de la ou des parois latérales du récipient vers une extrémité supérieure du récipient,
- où le premier débit circulant dirigé vers le haut (F₁) à travers le tube (6) et le deuxième débit circulant dirigé vers le haut (F₂) aux environs de la paroi du récipient sont, à l'approche du sommet du récipient, déviés l'un vers l'autre, et l'interaction entre les deux débits résulte en ce que le débit dévie de 180° et s'écoule vers le fond du récipient, et
- où, au fond du récipient, le débit est divisé en un débit vers la paroi du récipient et un débit se dirigeant vers le tube,
de sorte à mettre en place les deux débits circulants distincts (F₁, F₂).

2. Système selon la revendication 1, où le récipient est de forme tubulaire avec une paroi latérale de forme cylindrique, un fond de forme discale et un sommet, la paroi latérale, le fond, la paroi latérale et le sommet étant fabriqués en matériaux étanches aux fluides, et s'ils ne sont pas fabriqués intégralement de façon à être étanches aux fluides, ils sont au moins fixés les uns aux autres de façon étanche aux fluides.

3. Système selon l'une quelconque des revendications précédentes, où le récipient comprend des moyens de tri, typiquement sous la forme d'un élément de filtre disposé à l'entrée et/ou à la sortie du récipient, retenant les vecteurs biopelliculaires (10) dans le récipient.

4. Système selon l'une quelconque des revendications précédentes, où la deuxième alimentation en gaz (16) alimente en air atmosphérique, en oxygène et/ou en gaz produit dans le récipient (2) le fond du récipient pour la création d'un débit dans des régions de liquide stagnant, préférentiellement au fond et aux environs de la paroi latérale des récipients, la deuxième alimentation en gaz (16) recevant préférentiellement le gaz via la première entrée.

5. Système selon l'une quelconque des revendications précédentes, où le tube orienté verticalement (6) est soulevé de façon ajustable d'une distance au-dessus du fond du récipient permettant d'ajuster le débit de liquide et de vecteurs vers le haut du tube (6).

6. Système selon l'une quelconque des revendications précédentes, où la première alimentation en gaz (8) est préférentiellement une alimentation ajustable en gaz, par exemple en air/oxygène, vers le haut du tube orienté verticalement (6), la première alimentation en gaz (8) recevant préférentiellement le gaz via la première entrée (20).

7. Système selon la revendication 6, où la première alimentation en gaz (8) est disposée de façon interne dans le récipient (2) et à l'extrémité inférieure du tube orienté verticalement (6).

8. Système selon l'une quelconque des revendications précédentes, où le tube orienté verticalement (6) est disposé au centre du récipient (2).

9. Système selon l'une quelconque des revendications précédentes 1 à 8, où le système comprend un certain nombre de tubes orientés verticalement (6) distribués dans la zone de fond du récipient.

10. Système selon l'une quelconque des revendications précédentes, où le tube orienté verticalement (6) est de forme cylindrique.

11. Système selon l'une quelconque des revendications précédentes, où le système comprend une entrée de liquide (4) à travers laquelle le liquide à traiter est introduit dans le récipient (2) et une sortie de liquide (12) à travers laquelle le liquide traité quitte le récipient (2).

12. Système selon l'une quelconque des revendications précédentes, où la première entrée (20) et la première sortie (18) sont connectées l'une à l'autre et forment une boucle de recyclage pour recycler le gaz produit dans le récipient et/ou le gaz provenant d'une source de gaz, et où, préférentiellement, la première sortie (18) est également connectée à la deuxième alimentation en gaz (16).

13. Système de traitement biologique d'un liquide tel que l'eau, le système comprenant une multitude de récipients fermés (2) pour le traitement du liquide par des techniques de purification typiquement différentes, les récipients étant des récipients selon l'une quelconque des revendications précédentes, où les récipients sont connectés en série de sorte qu'une entrée du récipient en aval soit connectée à une sortie d'un récipient en amont, permettant ainsi la sortie du liquide dudit récipient en amont via la sortie pour entrer dans ledit récipient en aval via son entrée.

14. Système selon la revendication 13, où les vecteurs biopelliculaires sont des éléments présentant une structure apparentée à des grains minéraux ou une structure de surface de type caverneuse, ressemblant au motif d'une balle de golf.

15. Procédé de traitement de liquides, ledit procédé utilisant un système selon l'une quelconque des revendications précédentes, où dans ledit procédé, un liquide non traité est introduit dans un récipient (2) contenant des vecteurs micropelliculaires sur lesquels croît un microfilm, ledit microfilm générant la décomposition souhaitée de la contamination contenue dans le liquide, et où, au cours dudit procédé, un premier débit circulant et un deuxième débit circulant (F₁, F₂) de liquide et de vecteurs micropelliculaires sont créés dans le récipient présentant une zone de débit concentré dans laquelle a lieu la concentration des vecteurs micropelliculaires.
